(19) Europäisches Patentamt
European Patent Office
Office européen des brevets

(11) EP 4 421 934 A1

# (12) EUROPEAN PATENT APPLICATION

(43) Date of publication:
**28.08.2024 Bulletin 2024/35**

(21) Application number: **23209041.5**

(22) Date of filing: **10.11.2023**

(51) International Patent Classification (IPC):
***H01M 10/0567*** *(2010.01)* ***H01M 10/0568*** *(2010.01)*
***H01M 10/0525*** *(2010.01)* ***H01M 4/36*** *(2006.01)*
***H01M 4/38*** *(2006.01)* ***H01M 4/587*** *(2010.01)*
***H01M 4/62*** *(2006.01)* *H01M 4/525* *(2010.01)*

(52) Cooperative Patent Classification (CPC):
**H01M 10/0567; H01M 4/364; H01M 4/366; H01M 4/386; H01M 4/587; H01M 4/625; H01M 10/0525; H01M 10/0568;** H01M 4/525; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.02.2023 KR 20230025407**

(71) Applicant: **Samsung SDI Co., Ltd.**
**Yongin-si, Gyeonggi-do 17084 (KR)**

(72) Inventors:
- **OH, Seungryong**
  **17084 Yongin-si (KR)**
- **SHIN, Jeongmin**
  **17084 Yongin-si (KR)**
- **KIM, Myunghoon**
  **17084 Yongin-si (KR)**
- **KIM, Aeran**
  **17084 Yongin-si (KR)**
- **KIM, Yunhee**
  **17084 Yongin-si (KR)**
- **PARK, Injun**
  **17084 Yongin-si (KR)**

(74) Representative: **Crow, Martin et al**
**Venner Shipley LLP**
**200 Aldersgate**
**London EC1A 4HD (GB)**

## (54) RECHARGEABLE LITHIUM BATTERY

(57) Provided is a rechargeable lithium battery comprising a positive electrode comprising a positive electrode active material; a negative electrode comprising a negative electrode active material; and an electrolyte solution comprising a non-aqueous organic solvent, a lithium salt, and an additive, wherein the negative electrode active material comprises a Si composite, the additive comprises a compound represented by Chemical Formula 1, the lithium salt comprises a compound represented by Chemical Formula 2, and the compound represented by Chemical Formula 2 is comprised in an amount of about 5 to about 70 wt% based on 100 wt% of the total amount of the lithium salt.

Details of Chemical Formula 1 and Chemical Formula 2 are as described in the specification.

EP 4 421 934 A1

## Description

## BACKGROUND OF THE INVENTION

### (a) Field of the Invention

This disclosure relates to a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a high-capacity battery is required, but the high capacity may be realized through expansion of a voltage range, increasing energy density but bringing about a problem of deteriorating performance of a positive electrode due to oxidization of an electrolyte solution in the high voltage range.

For example, $LiPF_6$, which is most often used as a lithium salt of the electrolyte solution, reacts with a solvent of an electrolyte solution to promote depletion of the solvent and generate a large amount of gas. $LiPF_6$ is decomposed and produces a decomposition product such as HF, PFs, and the like, which causes depletion of the electrolyte solution and leads to performance deterioration and insufficient safety at a high temperature.

The decomposition products of the electrolyte solution are deposited into a film on the surface of an electrode to increase internal resistance of the battery and eventually cause problems of deteriorating battery performance and shortening a cycle-life. In particular, this side reaction is further accelerated at a high temperature where a reaction rate becomes faster, and gas components generated due to the side reaction may rapidly increase an internal pressure of the battery and thus have a fatal adverse effect on stability of the battery.

An oxidization of the electrolyte solution in the high voltage range is very accelerated and thus known to greatly increase resistance of the electrode during the long-term charge and discharge process.

Accordingly, an electrolyte solution applicable under conditions of a high voltage and a high temperature condition is being required.

## SUMMARY OF THE INVENTION

An embodiment is to provide a rechargeable lithium battery that improves battery stability by suppressing decomposition of an electrolyte solution and side reactions with an electrode to suppress an increase in battery internal resistance, and simultaneously, improves cycle-life characteristics at high temperature and room temperature due to increased capacity.

A rechargeable lithium battery according to an embodiment comprises a positive electrode comprising a positive electrode active material; a negative electrode comprising a negative electrode active material; and an electrolyte solution comprising a non-aqueous organic solvent, a lithium salt, and an additive, wherein the negative electrode active material comprises a Si composite, the additive comprises a compound represented by Chemical Formula 1, the lithium salt comprises a compound represented by Chemical Formula 2, and the compound represented by Chemical Formula 2 is comprised in an amount of about 5 to about 70 wt% based on 100 wt% of the total amount of the lithium salt.

[Chemical Formula 1]

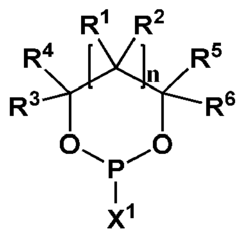

In Chemical Formula 1,

$X^1$ is a fluoro group, a chloro group, a bromo group, or an iodo group;
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group; and
n is an integer of 0 or 1;

[Chemical Formula 2]

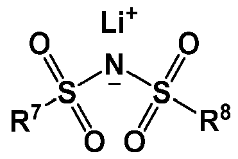

wherein, in Chemical Formula 2,
$R^7$ and $R^8$ are each independently a fluoro group, or a C1 to C4 fluoroalkyl group substituted with at least one fluoro group.

Chemical Formula 1 may comprise a compound represented by Chemical Formula 1A or Chemical Formula 1B.

[Chemical Formula 1A]

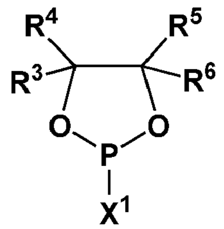

[Chemical Formula 1B]

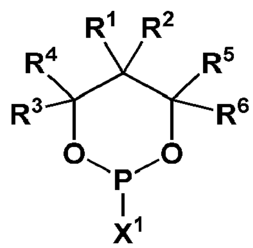

In Chemical Formula 1A and Chemical Formula 1B,

$X^1$ may be a fluoro group, a chloro group, a bromo group, or an iodo group, and
$R^1$ to $R^6$ may each independently be hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
$R^3$ and $R^4$ of Chemical Formula 1A may be each hydrogen, and
at least one of $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

The compound represented by Chemical Formula 1 may be comprised in an amount of about 0.1 to about 1 wt% based on 100 wt% of the electrolyte solution.
The Si composite may comprise a core comprising Si particles and amorphous carbon.

The core comprising the Si particles may comprise at least one of a Si-C composite, $SiO_x$($0 < x \leq 2$), and a Si alloy.

The Si-C composite may comprise a core comprising Si particles and amorphous carbon.

A central portion of the core may comprise voids.

A radius of the central portion may correspond to about 30% to about 50% of the radius of the Si-C composite, and an average particle diameter of the Si particles may be about 10 nm to about 200 nm.

The central portion may not comprise amorphous carbon, and the amorphous carbon may be present only on the surface portion of the negative electrode active material.

The negative electrode active material may further comprise crystalline carbon.

The crystalline carbon may comprise graphite, and the graphite may comprise natural graphite, artificial graphite, or a mixture thereof.

A content of the Si composite may be about 1.0 to about 60 wt% based on a total weight of the negative electrode active material.

The amorphous carbon may comprise soft carbon, hard carbon, mesophase pitch carbonized product, calcined coke, or a mixture thereof.

The compound represented by Chemical Formula 1 may be at least one selected from the compounds of Group 1.

[Group 1]

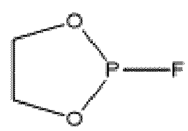

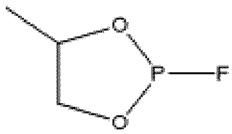

The compound represented by Chemical Formula 2 may comprise Chemical Formula 2A, Chemical Formula 2B, Chemical Formula 2C, or a combination thereof.

[Chemical Formula 2A]

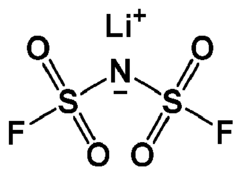

[Chemical Formula 2B]

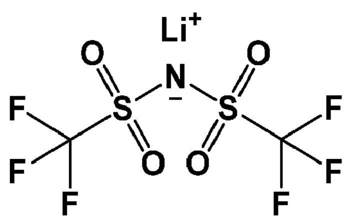

[Chemical Formula 2C]

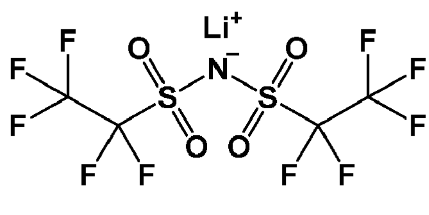

The compound represented by Chemical Formula 2 may be comprised in an amount of about 10 to about 50

wt% based on 100 wt% of the total amount of the lithium salt.

The additive may further comprise at least one of other additives of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene Carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate (LiPOzFz), and 2-fluoro biphenyl (2-FBP).

The positive electrode active material may be at least one type of lithium composite oxide represented by Chemical Formula 4.

[Chemical Formula 4] $Li_aNi_xCo_yM1_zM2_tO_2$

In Chemical Formula 4,

$0.9 \leq a < 1.2$, $0.8 \leq x< 1.0$, $0 < y \leq 0.2$, $0 < z \leq 0.2$, $x+ y + z = 1$, $0 \leq t \leq 0.1$,
$M^1$ is Mn, Al, or a combination thereof, and
$M^2$ is Ni, Co, Mn, Al, Ti, Mg, Zr, Ca, Nb, Fe, P, F, B, or a combination thereof.
In Chemical Formula 4, x may be $0.88 \leq x < 1.0$.

A rechargeable lithium battery with improved cycle-life characteristics at high temperature and room temperature and suppressed increase in internal resistance of the battery may be implemented.

## BRIEF DESCRIPTION OF THE DRAWINGS

FIG. 1 is a schematic view illustrating a rechargeable lithium battery according to an embodiment.

## DETAILED DESCRIPTION OF THE EMBODIMENTS

Hereinafter, a rechargeable lithium battery according to an embodiment will be described in detail with reference to the accompanying drawings. However, these embodiments are exemplary, the present invention is not limited thereto and the present invention is defined by the scope of claims.

As used herein, when a definition is not otherwise provided, "substituted" refers to a replacement of at least one hydrogen of a substituent or a compound by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, or a cyano group. In addition, in specific examples of the present invention, "substituted" refers to replacement of at least one hydrogen of a substituent or a compound by deuterium, a halogen, a C1 to C20 alkyl group, a C6 to C30 aryl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on types of a separator and an electrolyte and also may be classified to be cylindrical, prismatic, coin-type, pouch-type, and the like depending on shapes. In addition, it may be bulk type and thin film type depending on sizes. Structures and manufacturing methods for lithium ion batteries pertaining to this disclosure are well known in the art.

Herein, a cylindrical rechargeable lithium battery will be exemplarily described as an example of the rechargeable lithium battery. FIG. 1 schematically shows the structure of a rechargeable lithium battery according to an embodiment. Referring to FIG. 1, a rechargeable lithium battery 100 according to an embodiment comprises a battery cell comprising a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment will be described.

A rechargeable lithium battery according to an embodiment comprises a positive electrode, a negative electrode, and an electrolyte solution.

The electrolyte solution comprises a non-aqueous organic solvent, a lithium salt, and an additive.

The additive comprises a compound represented by Chemical Formula 1.

[Chemical Formula 1]

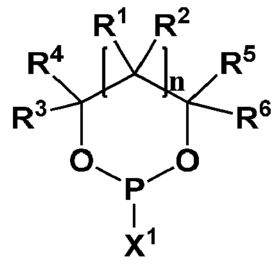

In Chemical Formula 1,

$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

The compound represented by Chemical Formula 1 has high high-temperature stability on the surface of the negative electrode, forms a solid electrolyte interface (SEI) with excellent ion conductivity, and suppresses a side reaction of $LiPF_6$ by a $-PO_2F$ functional group to reduce the gas generation caused by a decomposition reaction of the electrolyte solution during high-temperature storage.

Specifically, the compound represented by Chemical Formula 1 may be coordinated with a pyrolyzed product of a lithium salt such as $LiPF_6$ or anions dissociated from the lithium salt and thus form a complex, and the complex formation may stabilize the pyrolyzed product of a lithium salt such as $LiPF_6$ or the anions dissociated from the lithium salt. Therefore, it may suppress an undesired side reaction of the anions with the electrolyte solution and prevent gas generation inside a rechargeable lithium battery and thus greatly reduce a defect rate as well as improve cycle-life characteristics of the rechargeable lithium battery.

In particular, the cyclic phospholane derivative contributes to the stabilization of anions dissociated from the pyrolyzed product of the lithium salt or the lithium salt due to the formation of the complex, whereas the linear phosphite derivative induces a side reaction of $LiPF_6$ due to the dissociated $-PO_2F$ functional group and causes gas generation due to the decomposition reaction of the electrolyte solution when stored at high temperature. Therefore, when the compound represented by Chemical Formula 1 comprises the cyclic phospholane derivative is comprised compared to the linear phosphite derivative, cycle-life characteristics of the rechargeable lithium battery may be more remarkably improved.

Chemical Formula 1 represented by Chemical Formula 1A or Chemical Formula 1B.

[Chemical Formula 1A]

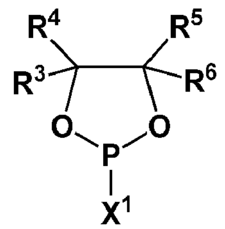

[Chemical Formula 1B]

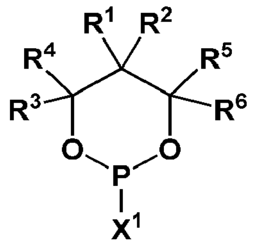

In Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 1A and Chemical Formula 1B, $R^3$ and $R^4$ may each be hydrogen, and at least one of $R^1$, $R^2$, $R^5$, and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 1 may be represented by Chemical Formula 1A.

In Chemical Formula 1A, $R^3$ and $R^4$ may each be hydrogen and at least one of $R^5$ and $R^6$ may be a substituted or unsubstituted C1 to C10 alkyl group.

The compound represented by Chemical Formula 1 may be comprised in an amount of about 0.1 to about 5 wt%, for example about 0.1 to about 1 wt%, based on 100 wt% of the electrolyte solution.

When the amount of the compound represented by Chemical Formula 1 is within the above range, a rechargeable lithium battery having improved high-temperature storage characteristics and cycle-life characteristics can be implemented.

For example, the compound represented by Chemical Formula 1 may be selected from the compounds of Group 1, and may be, for example, 2-fluoro-1,3,2-dioxaphospholane and 2-fluoro-4-methyl-1,3,2-dioxaphospholane.

[Group 1]

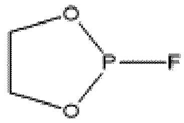

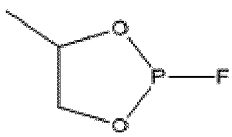

The lithium salt dissolved in the non-organic solvent supplies lithium ions in a battery, enables a basic operation of a rechargeable lithium battery, and improves transportation of the lithium ions between positive and negative electrodes.

The lithium salt may be used in a concentration ranging from about 0.1 M to about 2.0 M. When the lithium salt is comprised at the above concentration range, an electrolyte may have excellent performance and lithium ion mobility due to optimal electrolyte conductivity and viscosity.

The lithium salt comprises a compound represented by Chemical Formula 2.

[Chemical Formula 2]

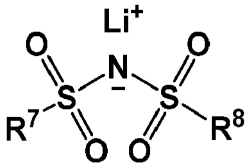

In Chemical Formula 2,

$R^7$ and $R^8$ are each independently a fluoro group, or a C1 to C4 fluoroalkyl group substituted with at least one fluoro group.

The compound represented by Chemical Formula 2 is a lithium salt having an imide group, and has high thermal stability and moisture stability, low corrosiveness and viscosity, and high electrical conductivity, so that it can realize excellent performance even under high power conditions and low temperatures.

For example, the compound represented by Chemical Formula 2 may comprise Chemical Formula 2A, Chemical Formula 2B, Chemical Formula 2C, or a combination thereof.

[Chemical Formula 2A]

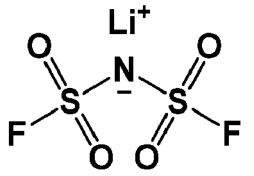

[Chemical Formula 2B]

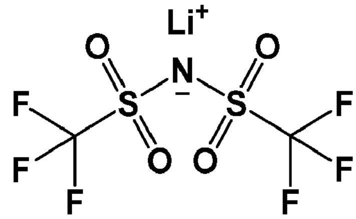

[Chemical Formula 2C]

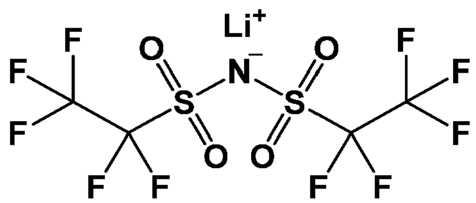

For example, the compound represented by Chemical Formula 2 may comprise $LiN(C_xF_{2x+1}SO_2)(C_yF_{2y+1}SO_2)$, where x and y are natural numbers, for example, integers from 0 to 20. Specific examples thereof may comprise Li(FSOz)zN (lithium bis(fluorosulfonyl)imide: LiFSI), $Li(CF_3SO_2)_2N$ (lithium bis(trifluoromethane sulfonyl)imide): LiTFSI), LiN(SOzCzFs)z, or a combination thereof.

The compound represented by Chemical Formula 2 may be comprised in an amount of about 5 to about 70 wt%, for example about 10 to about 50 wt%, based on 100 wt% of the total amount of the lithium salt.

If the amount of the compound represented by Chemical Formula 2 is less than about 5 wt% based on 100 wt% of the total amount of the lithium salt, it is difficult to realize excellent high-temperature storage characteristics and cycle-life characteristics, and if it exceeds about 70 wt%, there may be a problem in that aluminum (Al) used as a material for a positive electrode substrate and a terminal part is corroded.

Meanwhile, the additive may further comprise other additives in addition to the aforementioned additives.

The other additives may comprise at least one of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), polysulfone, 1,3,6-hexane tricyanide (HTCN), propene sultone (PST), propane sultone (PS), lithium tetrafluoroborate ($LiBF_4$), lithium difluorophosphate (LiPOzFz), and 2-fluorobiphenyl (2-FBP).

By further comprising the aforementioned other additives, cycle-life may be further improved or gases generated from the positive electrode and the negative electrode may be effectively controlled during high-temperature storage.

The aforementioned other additives may be comprised in an amount of about 0.2 wt% to about 20 wt% and specifically, about 0.2 to about 15 wt%, or for example, about 0.2 wt% to about 10 wt% based on 100 wt% of a total

amount of the electrolyte solution for a rechargeable lithium battery.

The aforementioned other additives, when comprised within the above contents, may minimize an increase in film resistance and thus contribute to improving battery performance.

On the other hand, the lithium salt may further other lithium salts in addition to a lithium salt represented by Chemical Formula 2.

The other lithium salts may comprise $LiPF_6$, $LiBF_4$, lithium difluoro(oxalato)borate (LiDFOB), LiPOzFz, $LiSbF_6$, $LiAsF_6$, $LiC_4F_9SO_3$, $LiClO_4$, $LiAlO_2$, $LiAlCl_4$, LiCl, LiI, $LiB(C_2O_4)_2$ (lithium bis(oxalato)borate: LiBOB), or a combination thereof.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may comprise dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethylpropionate, propylpropionate, decanolide, mevalonolactone, caprolactone, and the like. The ether-based solvent may comprise dibutyl ether, tetraglyme, diglyme, dimethoxyethane, 2-methyltetrahydrofuran, tetrahydrofuran, and the like. In addition, the ketone-based solvent may comprise cyclohexanone, and the like. The alcohol-based solvent may comprise ethanol, isopropyl alcohol, and the like and the aprotic solvent may comprise nitriles such as R-CN (wherein R is a hydrocarbon group having a C2 to C20 linear, branched, or cyclic structure and may comprise a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used at alone or in a mixture, and when the organic solvent is used in a mixture, the mixture ratio may be controlled in accordance with a desirable battery performance.

The carbonate-based solvent is prepared by mixing a cyclic carbonate and a chain carbonate. When the cyclic carbonate and chain carbonate are mixed together in a volume ratio of about 5:5 to about 1:9, a performance of the electrolyte solution may be improved.

In particular, in an embodiment, the non-aqueous organic solvent may comprise the cyclic carbonate and the chain carbonate in a volume ratio of about 5:5 to about 2:8, and as a specific example, the cyclic carbonate and the chain carbonate may be comprised in a volume ratio of about 4:6 to about 2:8.

As a more specific example, the cyclic carbonate and the chain carbonate may be comprised in a volume ratio of about 3:7 to about 2:8.

The non-aqueous organic solvent may further comprise an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 3.

[Chemical Formula 3]

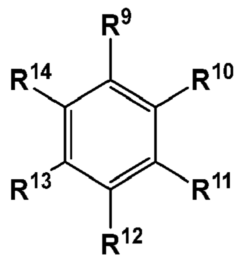

In Chemical Formula 3, $R^9$ to $R^{14}$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The positive electrode comprises a positive electrode current collector and a positive electrode active material layer on the positive electrode current collector, and the positive electrode active material layer comprises a positive electrode active material.

The positive electrode active material may comprise lithiated intercalation compounds that reversibly intercalate and deintercalate lithium ions.

Specifically, a composite oxide of a nickel-containing metal and lithium may be used.

Examples of the positive electrode active material may comprise a compound represented by any one of the following chemical formulas.

$Li_aA_{1-b}X_bD_2$ ($0.90 \le a \le 1.8, 0 \le b \le 0.5$); $Li_aA_{1-b}X_bO_{2-c}D_c$ ($0.90 \le a \le 1.8, 0 \le b \le 0.5, 0 \le c \le 0.05$); $LiaE_{1-b}X_bO_{2-c}Dc$ ($0.90 \le a \le 1.8, 0 \le b \le 0.5, 0 \le c \le 0.05$); $Li_aE_{2-b}X_bO_{4-c}D_c$ ($0.90 \le a \le 1.8, 0 \le b \le 0.5, 0 \le c \le 0.05$); $Li_aNi_{1-b-c}Co_bX_cD_\alpha$ ($0.90 \le a \le 1.8, 0 \le b \le 0.5, 0 \le c \le 0.5, 0 < \alpha \le 2$); $Li_aNi_{1-b-c}Co_bX_cO_{2-\alpha}T_\alpha$ ($0.90 \le a \le 1.8, 0 \le b \le 0.5, 0 \le c \le 0.05, 0 < \alpha < 2$); $Li_aNi_{1-b-c}Co_bX_cO_{2-\alpha}T_2$ ($0.90 \le a \le 1.8, 0 \le b \le 0.5, 0 \le c \le 0.05, 0 < \alpha < 2$); $Li_aNi_{1-b-c}Mn_bX_cD_\alpha$ ($0.90 \le a \le 1.8, 0 \le b \le 0.5, 0 \le c \le 0.05, 0 < \alpha \le 2$); $Li_aNi_{1-b-c}Mn_bX_cO_{2-\alpha}T_\alpha$ ($0.90 \le a \le 1.8, 0 \le b \le 0.5, 0 \le c \le 0.05, 0 < \alpha < 2$); $Li_aNi_{1-b-c}Mn_bX_cO_{2-\alpha}T_2$ ($0.90 \le a \le 1.8, 0 \le b \le 0.5, 0 \le c \le 0.05, 0 < \alpha < 2$); $Li_aNi_bE_cG_dO_2$ ($0.90 \le a \le 1.8, 0 \le b \le 0.9, 0 \le c \le 0.5, 0.001 \le d \le 0.1$); $Li_aNi_bCo_cMn_dG_eO_2$ ($0.90 \le a \le 1.8, 0 \le b \le 0.9, 0 \le c \le 0.5, 0 \le d \le 0.5, 0.001 \le e \le 0.1$); $Li_aNiG_bO_2$ ($0.90 \le a \le 1.8, 0.001 \le b \le 0.1$); $Li_aCoG_bO_2$ ($0.90 \le a \le 1.8, 0.001 \le b \le 0.1$); $Li_aMn_{1-b}G_bO_2$ ($0.90 \le a \le 1.8, 0.001 \le b \le 0.1$); $Li_aMn_2G_bO_4$ ($0.90 \le a \le 1.8, 0.001 \le b \le 0.1$); $Li_aMn_{1-g}G_gPO_4$ ($0.90 \le a \le 1.8, 0 \le g \le 0.5$); $QO_2$; $QS_2$; $LiQS_2$; $V_2O_5$; $LiV_2O_5$; LiZOz; $LiNiVO_4$; $Li_{(3-f)}J_2(PO_4)_3$ ($0 \le f \le 2$); $Li_{(3-f)}Fe_2(PO_4)_3$ ($0 \le f \le 2$); $Li_aFePO_4$($0.90 \le a \le 1.8$)

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may comprise at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element comprised in the coating layer may comprise Mg, Al, Co, K, Na, Ca, Si, Ti, V, Sn, Ge, Ga, B, As, Zr, or a mixture thereof. The coating process may comprise any conventional processes as long as it does not cause any side effects on the properties of the positive electrode active material (e.g., spray coating, dipping), which is well known to persons having ordinary skill in this art, so a detailed description thereof is omitted.

The positive electrode active material may be, for example, at least one of lithium composite oxides represented by Chemical Formula 4.

[Chemical Formula 4] $Li_aNi_xCo_yM^1_zM2_tO_2$

In Chemical Formula 4,

$0.9 \le a < 1.2, 0.8 \le x<1.0,0<y \le 0.2, 0 < z \le 0.2, x+ y + z = 1,0 \le t \le 0.1$,
$M^1$ is Mn, Al, or a combination thereof, and
$M^2$ is Ni, Co, Mn, Al, Ti, Mg, Zr, Ca, Nb, Fe, P, F, B, or a combination thereof.

In Chemical Formula 4, x may be $0.88 \le x < 1.0$.

A content of the positive electrode active material may be about 90 wt% to about 98 wt% based on a total weight of the positive electrode active material layer.

In an embodiment, the positive electrode active material layer may comprise a binder. A content of the binder may be about 1 wt% to about 5 wt% based on a total weight of the positive electrode active material layer.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Al may be used as the positive electrode current collector, but is not limited thereto.

In an example embodiment, the negative electrode active material comprises a Si composite.

The Si composite may comprise a core comprising Si particles and amorphous carbon. For example, the Si particles may comprise at least one of a Si-C composite, $SiO_x$ ($0 < x \leq 2$), and a Si alloy.

For example, the Si-C composite may comprise a core comprising Si particles and amorphous carbon.

A void may be comprised in the central portion of the core, and the radius of the central portion may correspond to about 30% to about 50% of the radius of the Si-C composite.

An average particle diameter of the Si particle may be about 10 nm to about 200 nm.

In the present specification, the average particle diameter may be a particle size (D50) at 50% by volume in a cumulative size-distribution curve.

When the average particle diameter of the Si particle is within the above range, volume expansion occurring during charging and discharging may be suppressed, and a break in a conductive path due to particle crushing during charging and discharging may be prevented.

The Si particles may be comprised in an amount of about 1 wt% to about 60 wt%, for example, about 3 wt% to about 60 wt%, based on a total weight of the Si-C composite.

The central portion does not comprise amorphous carbon, and the amorphous carbon may be present only on the surface portion of the negative electrode active material.

In this case, the surface portion means a region from the central portion to the outermost surface of the negative electrode active material.

In addition, the Si particles are substantially uniformly comprised in the negative electrode active material as a whole, that is, may be present in a substantially uniform concentration in the central portion and the surface portion.

The amorphous carbon may be soft carbon, hard carbon, a mesophase pitch carbonized product, calcined coke, or a combination thereof.

The amorphous carbon precursor may comprise a coal-based pitch, mesophase pitch, petroleum-based pitch, coal-based oil, petroleum-based heavy oil, or a polymer resin such as a phenol resin, a furan resin, or a polyimide resin.

The amorphous carbon may be comprised in an amount of about 1 to about 50 parts by weight, for example, about 5 to about 50 parts by weight, or about 10 to about 50 parts by weight, based on 100 parts by weight of the carbon-based active material.

The Si composite may be comprised in an amount of about 1 to about 60 wt%, for example, about 3 to about 60 wt%, based on a total weight of the negative electrode active material.

A negative electrode active material according to another embodiment may further comprise crystalline carbon together with the aforementioned Si composite.

When the negative electrode active material comprises the Si composite and the crystalline carbon together, the Si composite and the crystalline carbon may be comprised in the form of a mixture, in which the Si composite and the crystalline carbon may be comprised in a weight ratio of about 1:99 to about 50 :50. More specifically, the Si composite and crystalline carbon may be comprised in a weight ratio of about 5 : 95 to about 20 : 80.

The crystalline carbon may comprise, for example, graphite, and more specifically, may comprise natural graphite, artificial graphite, or a mixture thereof.

An average particle diameter of the crystalline carbon may be about 5 $\mu$m to about 30 $\mu$m.

In the present specification, the average particle diameter may be a particle size (D50) at 50% by volume in a cumulative size-distribution curve.

In the negative electrode active material layer, the negative electrode active material may be comprised in an amount of about 95 wt% to about 99 wt% based on a total weight of the negative electrode active material layer.

In an embodiment of the present disclosure, the negative electrode active material layer comprises a binder, and optionally a conductive material. In the negative electrode active material layer, a content of the binder may be about 1 wt% to about 5 wt% based on a total weight of the negative electrode active material layer. When the negative electrode active material layer comprises a conductive material, the negative electrode active material layer comprises about 90 wt% to about 98 wt% of the negative electrode active material, about 1 wt% to about 5 wt% of the binder, and about 1 wt% to about 5 wt% of the conductive material.

The binder serves to well bind the negative electrode active material particles to each other and also to well bind the negative electrode active material to the current collector. The binder comprises a non-water-soluble binder, a water-soluble binder, or a combination thereof.

The non-water-soluble binder may be selected from polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylenecopolymer, polyethyleneoxide, polyvinylpyrrolidone, polyepichlorohydrine, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity as a thickener. The cellulose-based compound comprises one or more of carboxymethyl cellulose, hydroxypropylmethyl cellulose, methyl cellulose, or alkali metal salts thereof. The alkali metals may be Na, K, or Li. Such a thickener may be comprised in an amount of about 0.1 parts by weight to about 3 parts by weight based on 100 parts by weight of the negative electrode active material.

The conductive material is included to provide electrode conductivity and any electrically conductive material may be used as a conductive material unless it causes a chemical change. Examples of the conductive material comprise a carbon-based material such as natural graphite, artificial graphite, carbon black, acetylene black, ketjen black, a carbon fiber, and the like; a metal-based material of a metal powder or a metal fiber comprising copper, nickel, aluminum silver, and the like; a conductive polymer such as a polyphenylene derivative; or a mixture thereof.

The negative current collector may be selected from a copper foil, a nickel foil, a stainless steel foil, a titanium foil, a nickel foam, a copper foam, a polymer substrate coated with a conductive metal, and a combination thereof.

A separator may be present between the positive electrode and the negative electrode depending on the type of the rechargeable lithium battery. Such a separator may comprise polyethylene, polypropylene, polyvinylidene fluoride, or multi-layers thereof such as a polyethylene/polypropylene double-layered separator, a polyethylene/polypropylene/polyethylene triple-layered separator, and a polypropylene/polyethylene/polypropylene triple-layered separator.

Hereinafter, examples of the present invention and comparative examples are described. These examples, however, are not in any sense to be interpreted as limiting the scope of the invention.

## Manufacture of Rechargeable Lithium Battery Cell

### Example 1

$LiNi_{0.88}Co_{0.105}Al_{0.015}O_2$ as a positive electrode active material, polyvinylidene fluoride as a binder, and carbon nanotubes (average length: 50 μm) as a conductive material were mixed in a weight ratio of 96:3:1, respectively, and were dispersed in N-methyl pyrrolidone to prepare a positive electrode active material slurry.

The positive electrode active material slurry was coated on a 20 μm-thick Al foil, dried at 100 °C, and then pressed to prepare a positive electrode.

As a negative electrode active material, a mixture of artificial graphite and a Si-C composite in a weight ratio of 93:7 was used, and the negative electrode active material, a styrene-butadiene rubber binder, and carboxymethyl cellulose were mixed in a weight ratio of 98:1:1, respectively, and dispersed in distilled water to prepare a negative electrode active material slurry.

The Si-C composite has a core comprising artificial graphite and silicon particles and a coal-based pitch coated on the surface of the core, wherein a content of the Si-C composite is about 1.0 wt% based on a total weight of the negative electrode active material.

The negative electrode active material slurry was coated on a 10 μm-thick Cu foil, dried at 100 °C, and then pressed to prepare a negative electrode.

An electrode assembly was prepared by assembling the prepared positive and negative electrodes and a polyethylene separator having a thickness of 25 μm, and an electrolyte solution was injected to prepare a rechargeable lithium battery cell.

A composition of an electrolyte solution is as follows.

(Composition of Electrolyte Solution)

Lithium salt: 10 wt% of a lithium salt represented by Chemical Formula 2A (hereinafter referred to as LiFSI) was included based on 100 wt% of the total lithium salt, and a concentration of the lithium salt is 1.5 M.

[Chemical Formula 2A]

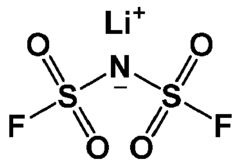

Solvent: ethylene carbonate: ethylmethyl carbonate: dimethyl carbonate (EC:EMC:DMC=volume ratio of 20:10:70)
Additive: 1 wt% of 2-fluoro-4-methyl-1 ,3,2-dioxaphosphorane based on 100 wt% of the total electrolyte solution

**Examples 2 to 4**

Each rechargeable lithium battery cell was manufactured in the same manner as in Example 1 except that the content of the Si-C composite was respectively changed into 20 wt%, 40 wt%, and 60 wt% based on the total negative electrode active material to manufacture a negative electrode.

**Example 5**

A rechargeable lithium battery cell was manufactured in the same manner as in Example 1 except that 35 wt% of a lithium salt represented by Chemical Formula 2A was used based on 100 wt% of the total lithium salt.

**Examples 6 to 8**

Each rechargeable lithium battery cell was manufactured in the same manner as in Example 5 except that the content of the Si-C composite was respectively changed into 20 wt%, 40 wt%, and 60 wt% based on the total negative electrode active material to manufacture a negative electrode.

**Example 9**

A rechargeable lithium battery cell was manufactured in the same manner as in Example 1 except that 50 wt% of a lithium salt represented by Chemical Formula 2A was used based on 100 wt% of the total lithium salt.

**Example 10 to 12**

Each rechargeable lithium battery cell was manufactured in the same manner as in Example 9 except that the content of the Si-C composite was respectively changed into 20 wt%, 40 wt%, and 60 wt% based on the total negative electrode active material to manufacture a negative electrode.

**Comparative Example 1**

A rechargeable lithium battery cell was manufactured in the same manner as in Example 1 except that an electrolyte solution comprising no 2-fluoro-4-methyl-1 ,3,2-dioxaphosphorane and a lithium salt comprising no lithium salt represented by Chemical Formula 2A were used.

**Comparative Examples 2 to 4**

Each rechargeable lithium battery cell was manufactured in the same manner as in Comparative Example 1 except that the content of the Si-C composite was respectively changed into 20 wt%, 40 wt%, and 60 wt% based on the total negative electrode active material to manufacture a negative electrode.

**Comparative Example 5**

A rechargeable lithium battery cell was manufactured in the same manner as in Example 1 except that an electrolyte solution comprising no 2-fluoro-4-methyl-1,3,2-dioxaphosphorane was used.

**Comparative Examples 6 to 8**

Each rechargeable lithium battery cell was manufactured in the same manner as in Comparative Example 5 except that the content of the Si-C composite was respectively changed into 20 wt%, 40 wt%, and 60 wt% based on the total negative electrode active material to manufacture a negative electrode.

**Comparative Example 9**

A rechargeable lithium battery cell was manufactured in the same manner as in Example 1 except that an electrolyte solution comprising no 2-fluoro-4-methyl-1,3,2-dioxaphosphorane was used.

**Comparative Examples 10 to 12**

Each rechargeable lithium battery cell was manufactured in the same manner as in Comparative Example 9 except that the content of the Si-C composite was respectively changed into 20 wt%, 40 wt%, and 60 wt% based on the total negative electrode active material to manufacture a negative electrode.

**Comparative Example 13**

A rechargeable lithium battery cell was manufactured in the same manner as in Example 1 except that 90 wt% of a lithium salt represented by Chemical Formula 2A based on 100 wt% of the total lithium salt was used.

**Comparative Examples 14 to 16**

Each rechargeable lithium battery cell was manufactured in the same manner as in Comparative Example 13 except that the content of the Si-C composite was respectively changed into 20 wt%, 40 wt%, and 60 wt% based on the total negative electrode active material to manufacture a negative electrode.

Tables 1 and 2 shows that composition contents and evaluation results of the manufactured rechargeable lithium battery cells. The evaluation results according to a content of a lithium salt are shown in Table 1, and in order to show the compositions according to each Si-C composite with or without additives and the evaluation results, some of the data of Table 1 are shown in Table 2.

**Evaluation 1: Evaluation of high-temperature charge/discharge cycle capacity characteristics**

The rechargeable lithium battery cells according to Examples 1 to 12, and Comparative Examples 1 to 16 were evaluated with respect to cycle characteristics after the charges and discharges under the following conditions.

The cells were 300 cycles charged and discharged within a range of 2.5 V to 4.2 V at a C-rate of 0.5 C at a high temperature of 60 °C, and a ratio of discharge capacity (mAh) after the 300 cycles to the initial discharge capacity (mAh) was calculated and then, provided as capacity retention (%) in Tables 1 and 2.

**Evaluation 2: Evaluation of room-temperature charge/discharge cycle resistance characteristics**

The rechargeable lithium battery cells of Examples 1 to 12 and Comparative Examples 1 to 16 were measured with respect to $\triangle V/\triangle I$ (voltage change /current change) as initial DC resistance (DCIR).

The cells were measured with respect to DC resistance after 300 cycles charges and discharges at a C-rate of 0.5 C within a range of 2.5 Vto 4.2 V at room temperature (25 °C), which was used to calculate a resistance (DCIR) increase rate (%) according to Equation 2, and the results are shown in Tables 1 and 2.

[Equation 2]

$$\text{DCIR change rate} = (\text{DCIR after 300 cycles} / \text{Initial DCIR}) \times 100\%$$

In Tables 1 and 2, the content of the Si-C composite was based on 100 wt% of the total negative electrode active material, the content of the 2-fluoro-4-methyl-1 ,3,2-dioxaphosphorane was based on 100 wt% of the total electrolyte solution, and the content of LiFSI was based on 100 wt% of the lithium salt.

**[Table 1]**

| | Negative electrode active material | Electrolyte solution | | Evaluation of battery characteristics | | |
|---|---|---|---|---|---|---|
| | Content of Si-C composite (wt%) | Content of 2-fluoro-4-methyl-1,3,2-dioxaphosp horane (wt%) | Content of LiFSI (wt%) | Initial resista nce (mΩ) | High-temperature cycle-life capacity retention @300cy (%) | Room-temperature cycle-life resistance increase rate @300cy (%) |
| Comp. Ex. 1 | 1 | 0 | 0 | 31.1 | 75.3 | 250.6 |
| Comp. Ex. 5 | | | 10 | 40.4 | 60.2 | 275.7 |
| Comp. Ex. 9 | | 1 | 0 | 43.5 | 67.8 | 268.1 |
| Ex. 1 | | | 10 | 13.4 | 94.1 | 120.3 |
| Ex. 5 | | | 35 | 11.5 | 97.9 | 127.8 |
| Ex. 9 | | | 50 | 14.6 | 90.4 | 152.9 |
| Comp. Ex. 13 | | | 90 | 84 | 52.7 | 325.8 |
| Comp. Ex. 2 | 20 | 0 | 0 | 46.7 | 67 | 401 |
| Comp. Ex. 6 | | | 10 | 60.6 | 53.6 | 441.1 |
| Comp. Ex. 10 | | 1 | 0 | 65.3 | 60.3 | 429 |
| Ex. 2 | | | 10 | 20.1 | 92.1 | 159.7 |
| Ex. 6 | | | 35 | 17.3 | 95.8 | 167.7 |
| Ex. 10 | | | 50 | 21.9 | 88.5 | 185.9 |
| Comp. Ex. 14 | | | 90 | 126 | 46.9 | 521.2 |
| Comp. Ex. 3 | 40 | 0 | 0 | 52.9 | 57.2 | 451.1 |
| Comp. Ex. 7 | | | 10 | 68.7 | 45.8 | 496.2 |
| Comp. Ex. 11 | | 1 | 0 | 74 | 51.5 | 482.7 |
| Ex. 3 | | | 10 | 22.7 | 85.8 | 188.4 |
| Ex. 7 | | | 35 | 19.6 | 89.3 | 202.4 |
| Ex. 11 | | | 50 | 24.8 | 82.4 | 220.1 |
| Comp. Ex. 15 | | | 90 | 142.7 | 40.1 | 586.4 |

(continued)

| | Negative electrode active material | Electrolyte solution | | Evaluation of battery characteristics | | |
|---|---|---|---|---|---|---|
| | Content of Si-C composite (wt%) | Content of 2-fluoro-4-methyl-1,3,2-dioxaphosphorane (wt%) | Content of LiFSI (wt%) | Initial resistance (mΩ) | High-temperature cycle-life capacity retention @300cy (%) | Room-temperature cycle-life resistance increase rate @300cy (%) |
| Comp. Ex. 4 | 60 | 0 | 0 | 65.3 | 45.9 | 526.3 |
| Comp. Ex. 8 | | | 10 | 84.9 | 36.7 | 578.9 |
| Comp. Ex. 12 | | 1 | 0 | 91.4 | 41.3 | 563.1 |
| Ex. 4 | | | 10 | 28.1 | 80.4 | 234.9 |
| Ex. 8 | | | 35 | 24.2 | 83.6 | 241.6 |
| Ex. 12 | | | 50 | 30.7 | 77.2 | 244 |
| Comp. Ex. 16 | | | 90 | 176.3 | 32.2 | 684.1 |

**[Table 2]**

| | Electrolyte solution | | Negative electrode active material | Evaluation of battery characteristics | | |
|---|---|---|---|---|---|---|
| | Content of LiFSI (wt%) | Content of 2-fluoro-4-methyl-1,3,2-dioxaphosphorane (wt%) | Content of Si-C composite (wt%) | Initial resistance (mΩ) | High-temperature cycle-life capacity retention @300cy (%) | Room-temperature cycle-life resistance increase rate @300cy (%) |
| Comp. Ex. 5 | 10 | 0 | 1 | 40.4 | 60.2 | 275.7 |
| Ex. 1 | | 1 | | 13.4 | 94.1 | 120.3 |
| Comp. Ex. 6 | 10 | 0 | 20 | 60.6 | 53.6 | 441.1 |
| Ex. 2 | | 1 | | 20.1 | 92.1 | 159.7 |
| Comp. Ex. 7 | 10 | 0 | 40 | 68.7 | 45.8 | 496.2 |
| Ex. 3 | | 1 | | 22.7 | 85.8 | 188.4 |
| Comp. Ex. 8 | 10 | 0 | 60 | 84.9 | 36.7 | 578.9 |
| Ex. 4 | | 1 | | 28.1 | 80.4 | 234.9 |

Referring to Table 1, high-temperature capacity retention and a room-temperature resistance increase rate

according to a content of LiFSI were confirmed.

Specifically, the examples having each LiFSI content of 10, 35, and 50 wt% based on 100 wt% of the total lithium salt exhibited high high-temperature capacity retention and a low room-temperature resistance increase rate.

On the contrary, the comparative examples having each LiFSI content of 0 or 90 wt% based on 100 wt% of the total lithium salt exhibited low high-temperature capacity retention and a high room-temperature resistance increase rate.

In addition, referring to Table 2, when a content of LiFSI was the same as a content of the Si-C composite, the high-temperature capacity retention and the room-temperature resistance increase rate according to the presence or absence of an additive (2-fluoro-4-methyl-1,3,2-dioxaphosphorane) were confirmed.

Comparing Comparative Example 5 with Example 1, Comparative Example 6 with Example 2, Comparative Example 7 with Example 3, and Comparative Example 8 with Example 4, the examples comprising the additive (2-fluoro-4-methyl-1,3,2-dioxaphosphorane) exhibited high high-temperature capacity retention and a low room-temperature resistance increase rate.

Resultantly, when an electrolyte solution comprising an additive (2-fluoro-4-methyl-1,3,2-dioxaphosphorane) and a negative electrode comprising a Si-C composite were used with a lithium salt represented by Chemical Formula 2A in a specific weight range, resistance characteristics and cycle-life characteristics were simultaneously significantly improved. On the contrary, when one of the aforementioned three materials was missed or even if the three materials were all included, when the lithium salt represented by Chemical Formula 2A was used out of the specific weight range, the desired effect was not achieved.

Accordingly, the rechargeable lithium battery cell according to the scope of an embodiment may not only realize excellent cycle characteristics due to improved impregnation properties of an electrolyte solution but also exhibit improved high-temperature stability due to reduced resistance after high-temperature storage.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

100: rechargeable lithium battery
112: negative electrode
113: separator
114: positive electrode
120: battery case
140: sealing member

## Claims

1. A rechargeable lithium battery, comprising

a positive electrode comprising a positive electrode active material;
a negative electrode comprising a negative electrode active material; and
an electrolyte solution comprising a non-aqueous organic solvent, a lithium salt, and an additive,
wherein the negative electrode active material comprises a Si composite,
the additive comprises a compound represented by Chemical Formula 1,
the lithium salt comprises a compound represented by Chemical Formula 2, and
the compound represented by Chemical Formula 2 is comprised in an amount of about 5 to about 70 wt% based on 100 wt% of the total amount of the lithium salt:

[Chemical Formula 1]

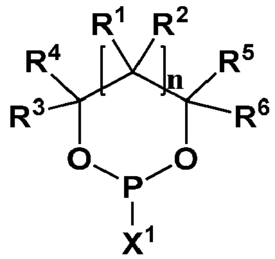

wherein, in Chemical Formula 1,
$X^1$ is a fluoro group, a chloro group, a bromo group, or an iodo group;
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group; and
n is an integer of 0 or 1;

[Chemical Formula 2]

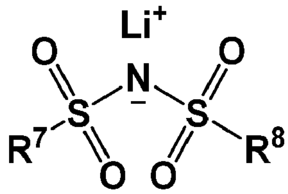

wherein, in Chemical Formula 2,
$R^7$ and $R^8$ are each independently a fluoro group, or a C1 to C4 fluoroalkyl group substituted with at least one fluoro group.

**2.** The rechargeable lithium battery of claim 1, wherein
Chemical Formula 1 is represented by Chemical Formula 1A or Chemical Formula 1B:

[Chemical Formula 1A]

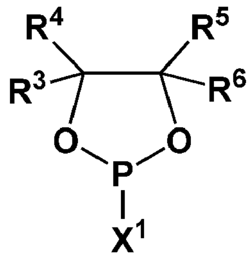

[Chemical Formula 1B]

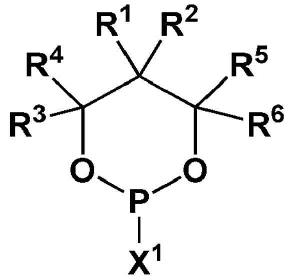

wherein, in Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**3.** The rechargeable lithium battery of claim 2, wherein

$R^3$ and $R^4$ of Chemical Formula 1A are each hydrogen, and
at least one of $R^5$ and $R^6$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**4.** The rechargeable lithium battery of any one of claims 1 to 3, wherein
the compound represented by Chemical Formula 1 is comprised in an amount of about 0.1 to about 1 wt% based on 100 wt% of the electrolyte solution.

**5.** The rechargeable lithium battery of any one of claims 1 to 4, wherein
the Si composite comprises a core comprising Si particles and amorphous carbon.

**6.** The rechargeable lithium battery of claim 5, wherein the core comprising the Si particles comprises at least one of a Si-C composite, $SiO_x$ ($0 < x \leq 2$), and a Si alloy.

**7.** The rechargeable lithium battery of claim 6, wherein
the Si-C composite comprises a core comprising Si particles and amorphous carbon.

**8.** The rechargeable lithium battery of claim 7, wherein either:

(A) a central portion of the core comprises voids; AND/OR
(B) a central portion of the core comprises voids and a radius of the central portion corresponds to about 30% to about 50% of the radius of the Si-C composite, and an average particle diameter of the Si particles is about 10 nm to about 200 nm; AND/OR
(C) a central portion of the core comprises voids and the central portion does not comprise amorphous carbon, and the amorphous carbon is present only on the surface portion of the negative electrode active material; AND/OR
(D) the negative electrode active material further comprises crystalline carbon; AND/OR
(E) the negative electrode active material further comprises crystalline carbon and the crystalline carbon comprises graphite, and the graphite comprises natural graphite, artificial graphite, or a mixture thereof; AND/OR
(F) the amorphous carbon comprises soft carbon, hard carbon, mesophase pitch carbonized product, calcined coke, or a mixture thereof.

**9.** The rechargeable lithium battery of any one of claims 1 to 8, wherein
a content of the Si composite is about 1.0 to about 60 wt% based on a total weight of the negative electrode active material.

**10.** The rechargeable lithium battery of any one of claims 1 to 9, wherein the compound represented by Chemical Formula 1 is at least one selected from the compounds of Group 1:

[Group 1]

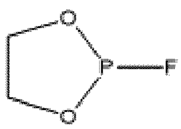

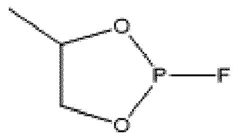

.

**11.** The rechargeable lithium battery of any one of claims 1 to 10, wherein the compound represented by Chemical Formula 2 comprises Chemical Formula 2A, Chemical Formula 2B, Chemical Formula 2C, or a combination thereof:

[Chemical Formula 2A]

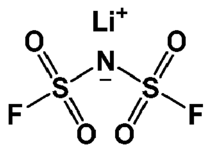

[Chemical Formula 2B]

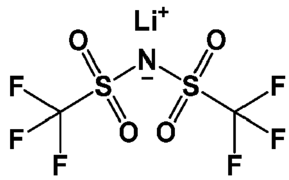

[Chemical Formula 2C]

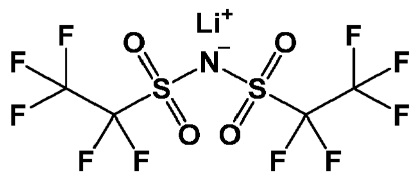

.

**12.** The rechargeable lithium battery of any one of claims 1 to 11, wherein the compound represented by Chemical Formula 2 is comprised in an amount of about 10 to about 50 wt% based on 100 wt% of the total amount of the lithium salt.

**13.** The rechargeable lithium battery of any one of claims 1 to 12, wherein the additive further comprises at least one of other additives of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene Carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate (LiPOzFz), and 2-fluoro biphenyl (2-FBP).

**14.** The rechargeable lithium battery of any one of claims 1 to 13, wherein the positive electrode active material is at least one type of lithium composite oxide represented by Chemical Formula 4:

[Chemical Formula 4] $Li_aNi_xCo_yM^1_zM2_tO_2$

wherein, in Chemical Formula 4,

$0.9 \leq a < 1.2$, $0.8 \leq x < 1.0$, $0 < y \leq 0.2$, $0 < z \leq 0.2$, $x + y + z = 1$, $0 \leq t \leq 0.1$,
$M^1$ is Mn, Al, or a combination thereof, and
$M^2$ is Ni, Co, Mn, Al, Ti, Mg, Zr, Ca, Nb, Fe, P, F, B, or a combination thereof.

**15.** The rechargeable lithium battery of claim 14, wherein in Chemical Formula 4, x is $0.88 \leq x < 1.0$.

FIG. 1

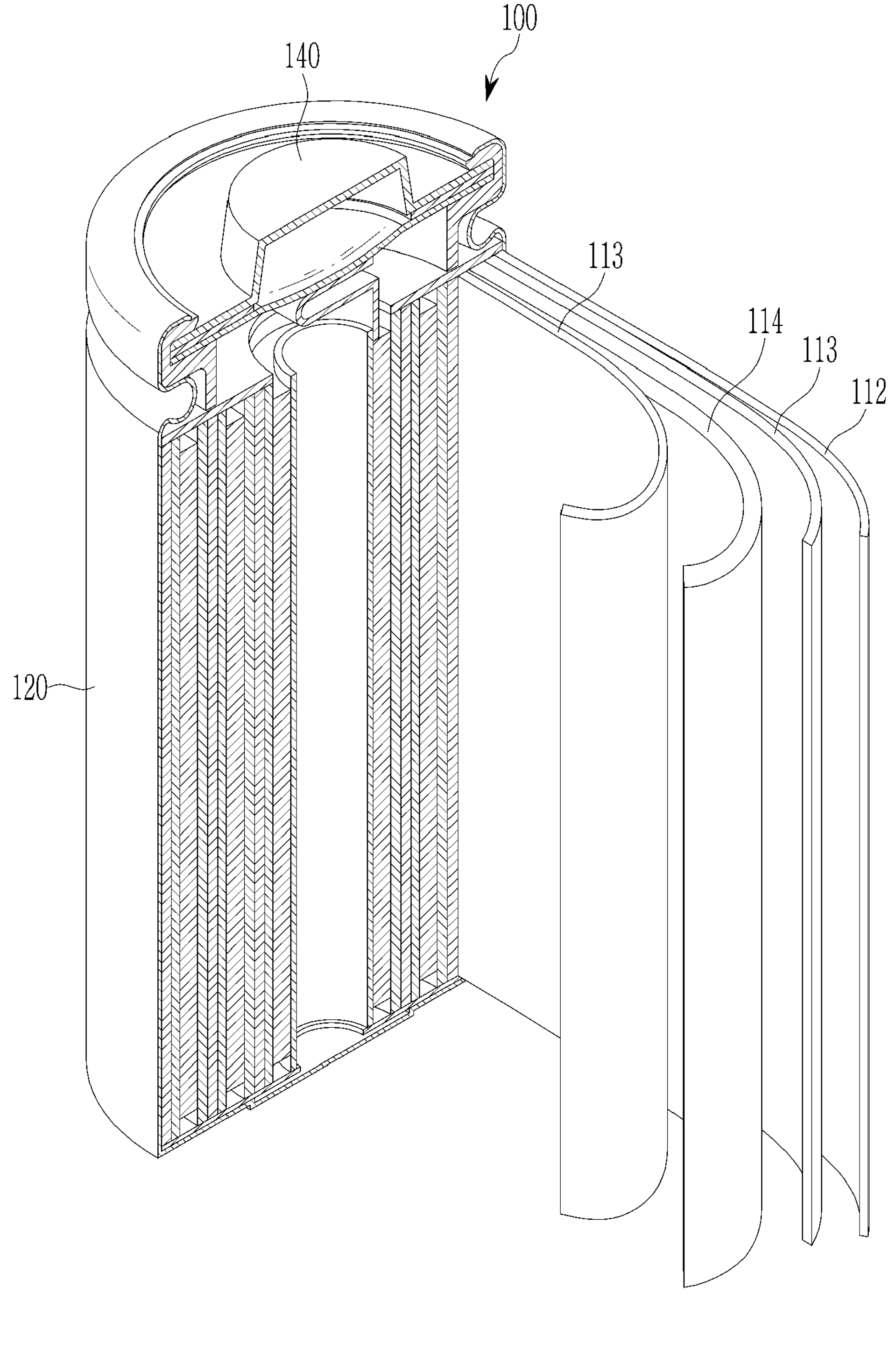

Europäisches Patentamt
European Patent Office
Office européen des brevets

# EUROPEAN SEARCH REPORT

Application Number
EP 23 20 9041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>X,P<br>Y,P | WO 2022/158703 A1 (SAMSUNG SDI CO., LTD.) 28 July 2022 (2022-07-28)<br>* abstract *<br>& EP 4 216 332 A1 (SAMSUNG SDI CO., LTD.) 26 July 2023 (2023-07-26)<br>* paragraph [0008] - paragraph [0010] *<br>* paragraph [0019] - paragraph [0030] *<br>* paragraph [0039] - paragraph [0040] *<br>* paragraph [0059] - paragraph [0075] *<br>* paragraph [0087] - paragraph [0089] *<br>* paragraph [0091] - paragraph [0104] *<br>* paragraph [0111] - paragraph [0129] *<br>* comparative examples 8-11, 17-20; examples 3, 4, 7, 8, 11, 12, 15, 16; table 1 *<br>* paragraph [0144] - paragraph [0147] *<br>* claims 1, 9-16 *<br>----- | 1-12,14, 15<br>13<br>1-12,14, 15<br>13 | INV.<br>H01M10/0567<br>H01M10/0568<br>H01M10/0525<br>H01M4/36<br>H01M4/38<br>H01M4/587<br>H01M4/62<br><br>ADD.<br>H01M4/525 |
| Y<br>A | KR 2019 0127412 A (SAMSUNG SDI CO., LTD.) 13 November 2019 (2019-11-13)<br>* abstract *<br>* paragraph [0009] - paragraph [0015] *<br>* paragraph [0020] - paragraph [0030] *<br>* paragraph [0082] - paragraph [0086] *<br>* comparative example 6; examples 1-3; table 1 *<br>* claims 1-7, 10 *<br>----- | 13<br>1-12,14, 15 | TECHNICAL FIELDS SEARCHED (IPC)<br>H01M |
| A | WO 2022/158728 A1 (SAMSUNG SDI CO., LTD.) 28 July 2022 (2022-07-28)<br>* abstract *<br>-/-- | 1-15 | |

The present search report has been drawn up for all claims

1

| Place of search | Date of completion of the search | Examiner |
|---|---|---|
| Munich | 23 April 2024 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 23 20 9041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | & EP 4 220 803 A1 (SAMSUNG SDI CO., LTD.) 2 August 2023 (2023-08-02)<br>* paragraph [0009] *<br>* paragraph [0017] - paragraph [0023] *<br>* paragraph [0033] - paragraph [0034] *<br>* paragraph [0051] - paragraph [0058] *<br>* paragraph [0071] - paragraph [0076] *<br>* paragraph [0078] - paragraph [0089] *<br>* paragraph [0095] - paragraph [0113] *<br>* paragraph [0128] - paragraph [0131] *<br>* comparative examples 6, 10-12, 16-18; examples 4-6, 10-12, 16-18, 22-24, 28-30, 34-36; table 1 *<br>* claims 1, 9-11, 13-15 *<br>----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 23 April 2024 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 23 20 9041

This annex lists the patent family members relating to the patent documents cited in the above-mentioned European search report. The members are as contained in the European Patent Office EDP file on
The European Patent Office is in no way liable for these particulars which are merely given for the purpose of information.

23-04-2024

| Patent document cited in search report | Publication date | Patent family member(s) | Publication date |
|---|---|---|---|
| WO 2022158703 A1 | 28-07-2022 | CN 116745960 A | 12-09-2023 |
| | | EP 4216332 A1 | 26-07-2023 |
| | | JP 2024501001 A | 10-01-2024 |
| | | KR 20220106578 A | 29-07-2022 |
| | | US 2023253621 A1 | 10-08-2023 |
| | | WO 2022158703 A1 | 28-07-2022 |
| KR 20190127412 A | 13-11-2019 | NONE | |
| WO 2022158728 A1 | 28-07-2022 | CN 116806384 A | 26-09-2023 |
| | | EP 4220803 A1 | 02-08-2023 |
| | | JP 2024503907 A | 29-01-2024 |
| | | KR 20220106579 A | 29-07-2022 |
| | | US 2023307707 A1 | 28-09-2023 |
| | | WO 2022158728 A1 | 28-07-2022 |

EPO FORM P0459

For more details about this annex : see Official Journal of the European Patent Office, No. 12/82